# FASCICULE DE BREVET EUROPEEN

(11) **EP 2 723 992 B1**
(45) Date de publication et mention de la délivrance du brevet: **30.09.2020**
(21) Numéro de dépôt: 12738511.0
(22) Date de dépôt: 20.06.2012
(51) Int. Cl.: F04D 29/02, C04B 35/571, B29B 11/16, F01D 9/04, B29C 70/24, F01D 9/02, C04B 35/565, F01D 5/28, C04B 35/80, F04D 29/54, C04B 35/563

(54) **PIECE DE TURBOMACHINE FORMANT REDRESSEUR DE COMPRESSEUR OU DISTRIBUTEUR DE TURBINE ET PROCEDE POUR SA FABRICATION**
TURBINENMOTORTEIL ALS KOMPRESSORSTATOR ODER TURBINENDÜSE UND HERSTELLUNGSVERFAHREN DAFÜR
TURBINE ENGINE PART FORMING A COMPRESSOR STATOR OR TURBINE NOZZLE, AND METHOD FOR MANUFACTURING SAME

(30) Priorité: 21.06.2011 FR 1155430
(43) Date de publication de la demande: 30.04.2014
(73) Titulaire: Safran Aircraft Engines, 75015 Paris (FR)
(72) Inventeur: BELMONTE, Olivier, F-77550 Moissy-Cramayel Cedex (FR); FOLL, Julien, F-77550 Moissy-Cramayel Cedex (FR)
(74) Mandataire: Cabinet Beau de Loménie
(86) Numéro de dépôt international: PCT/FR2012/051387
(87) Numéro de publication internationale: WO 2012/175867

(56) Documents cités:
- WO-A1-91/15357
- FR-A1- 2 946 999
- FR-A1- 2 953 885
- US-A- 3 632 460

## Description

### Arrière-plan de l'invention

L'invention concerne les pièces de turbomachines formant redresseurs de compresseur ou distributeurs de turbine. Le domaine d'application de l'invention est notamment celui des moteurs aéronautiques. L'invention est toutefois applicable à d'autres turbomachines, par exemple des turbines industrielles.

Dans des turbomachines, les modules de compresseur et de turbine comprennent des roues mobiles alternant avec des redresseurs, dans le cas de compresseurs ou avec des distributeurs, dans le cas de turbines.

Un redresseur de compresseur traditionnel couramment utilisé comprend une pluralité d'aubes de redressement fixées par exemple par soudage, à une couronne extérieure qui a une fonction structurale et qui délimite la veine d'écoulement d'air du côté extérieur. Du côté intérieur, la veine d'écoulement d'air est délimitée par une virole intérieure non structurale. La couronne extérieure, les aubes et la couronne intérieure sont typiquement en métal.

Un distributeur de turbine traditionnel est couramment formé de plusieurs secteurs en métal obtenus en une seule pièce par fonderie et comprenant chacun un secteur de virole extérieure définissant la veine d'écoulement des gaz du côté extérieur, un secteur de virole intérieure définissant la veine d'écoulement des gaz du côté intérieur et des aubes reliant les secteurs de virole extérieure et intérieure.

L'utilisation de matériaux composites comprenant un renfort fibreux densifié par une matrice a déjà été proposée pour différentes pièces de turbomachines, notamment des pales de roues mobiles, des anneaux de turbine, des éléments de distributeur de turbine ou des éléments d'arrière-corps. Pour des pièces exposées en service à des températures élevées, l'utilisation de matériau composite à matrice céramique (CMC) a été préconisée. La fabrication de telles pièces comprend la réalisation d'une préforme fibreuse formant le renfort fibreux du matériau composite et ayant une forme voisine de celle de la pièce à fabriquer, et la densification de la préforme fibreuse par une matrice. La préforme fibreuse peut être obtenue par divers processus textiles, notamment par mise en forme d'une ébauche fibreuse réalisée par tissage multi-couches ou tridimensionnel.

De telles pièces en matériau composite sont remarquables en ce qu'elles présentent des propriétés mécaniques élevées, au moins comparables à celles de pièces métalliques similaires, mais avec une masse plus faible, et en ce que, dans le cas de CMC, ces pièces conservent leurs propriétés mécaniques à de très hautes températures et conviennent lorsque des températures de fonctionnement de turbomachines plus élevées sont recherchées pour améliorer le rendement et réduire les émissions polluantes.

Ainsi la réalisation d'une aube de soufflante par densification par une matrice organique d'une préforme fibreuse obtenue par tissage tridimensionnel est décrite dans le document EP 1 526 285. Les documents WO 2010/06140 et WO 2010/103213 décrivent respectivement la réalisation d'aubes à plate-forme et/ou talon intégrés et de secteurs d'anneau de turbine en CMC à partir d'ébauches fibreuses tissées multi-couches.

Le document WO 2010/146288 décrit un élément de distributeur de turbine en CMC formé de secteurs de virole intérieure et de virole extérieure et d'aubes s'étendant entre les secteurs et obtenu à partir d'une ébauche fibreuse tissée multi-couches avec continuité du renfort fibreux dans tout le volume de l'élément de distributeur. Le renfort fibreux comporte des fils qui s'étendent: continûment le long de deux aubes en passant par le secteur de virole intérieure ou par le secteur de virole extérieure mais qui sont ensuite interrompus. En outre, il n'y a pas de continuité de fils du renfort fibreux en direction circonférentielle le long de chacun des secteurs de virole intérieure et de virole extérieure.

Le document WO 91/15357 décrit un pliage « en accordéon » d'une ébauche fibreuse tricotée permettant de réaliser un secteur de distributeur à plusieurs aubes. Toutefois, le pliage est tel qu'il ne permet pas non plus d'assurer une continuité du renfort fibreux en direction circonférentielle le long du secteur de virole extérieure et le long de virole intérieure.

### Objet et résumé de l'invention

L'invention a pour but de proposer une pièce de turbomachine formant redresseur de compresseur ou distributeur de turbine selon la revendication 1 réalisée en matériau composite et présentant des propriétés mécaniques élevées.

Le renfort fibreux peut comprendre un ensemble de fils s'étendant continûment le long d'un trajet parcourant longitudinalement au moins trois aubes consécutives en passant alternativement dans la virole intérieure et dans la virole extérieure, lesdites au moins trois aubes consécutives s'étendant entre un segment de virole intérieure et un segment de virole extérieure avec des fils du renfort fibreux tissé s'étendant continûment en direction circonférentielle le long du segment de virole intérieure et des fils du renfort fibreux tissé s'étendant continûment en direction circonférentielle le long du segment de virole extérieure.

La continuité de fils du renfort fibreux contribue à conférer une tenue mécanique élevée. Selon les conditions d'utilisation, la pièce peut être en matériau composite à matrice organique ou en CMC.

Avantageusement, la virole intérieure, la virole extérieure et les aubes forment une seule pièce en matériau composite.

Dans ce cas, le renfort fibreux comprend un ensemble de fils s'étendant continûment le long d'un trajet parcourant l'une des viroles intérieure et extérieure sur sa circonférence, puis successivement la totalité des aubes, puis parcourant l'autre des viroles intérieure et extérieure sur sa circonférence.

En variante, la pièce de turbomachine est formée de plusieurs secteurs, chaque secteur formant une seule pièce en matériau composite avec un secteur de virole intérieure, un secteur de virole extérieure, et au moins deux aubes, voire au moins trois aubes, s'étendant entre les secteurs de virole et solidaires de ceux-ci.

Selon une particularité de réalisation, la pièce de turbomachine peut comprendre en outre une bride solidaire de la virole extérieure et s'étendant radialement vers l'extérieur à partir de celle-ci.

Selon une autre particularité de réalisation, la pièce de turbomachine peut comprendre en outre des parties de paroi solidaires de la virole intérieure et définissant du côté intérieur de celle-ci un logement à section transversale sensiblement en forme de U, s'ouvrant vers l'intérieur.

L'invention a aussi pour but de proposer un procédé selon la revendication 6 permettant la fabrication d'une telle pièce de turbomachine à partir d'une préforme fibreuse unitaire.

Selon un mode particulier de mise en œuvre du procédé, la réalisation de la préforme fibreuse comprend :
(1) le tissage d'une bande fibreuse avec le premier ensemble de fils s'étendant continûment dans la direction longitudinale de la bande et comprenant plusieurs couches de fils parallèles entre eux, et un deuxième ensemble de fils réalisant un tissage avec les fils du premier ensemble le long de segments tissés de la bande fibreuse séparés les uns des autres par des segments non tissés, la bande fibreuse comprenant :
   - une première partie de bande fibreuse s'étendant sur une longueur correspondant à celle de la première partie de préforme, la première partie de bande fibreuse étant formée de segments tissés alternant avec des segments non tissés,
   - une deuxième partie de bande fibreuse suivant immédiatement la première partie et formée des segments tissés alternant avec des segments non tissés, les segments tissés de la deuxième partie de bande fibreuse correspondant aux deuxièmes parties de préforme et ayant une longueur correspondant à la dimension longitudinale des aubes, et les segments non tissés de la deuxième partie de bande fibreuse formant des parties de raccordement entre préformes d'aubes consécutives, et
   - une troisième partie de bande fibreuse suivant immédiatement la deuxième partie et s'étendant sur une longueur correspondant à celle de la troisième partie de préforme, la troisième partie de bande fibreuse étant formée de segments tissés alternant avec des segments non tissés,
   - le nombre total de segments tissés et non tissés dans chacune des première et troisième partie étant égal à celui des aubes, et
(2) la mise en forme de la bande fibreuse comprenant :
   • l'enroulement sur elle-même de la première partie de bande fibreuse,
   • le pliage de la deuxième partie de bande fibreuse pour disposer les segments tissés de celle-ci sensiblement radialement par rapport à la première partie de bande fibreuse enroulée sur elle-même, et
   • l'enroulement sur elle-même de la troisième partie de bande fibreuse,
   • les segments non tissés de la deuxième partie de bande fibreuse formant parties de raccordement entre préformes d'aubes consécutives étant engagés à travers les segments non tissés alternativement de la première partie de bande fibreuse enroulée et de la troisième partie de bande fibreuse enroulée.

Dans ce cas, il peut être prévu qu'après engagement d'un segment non tissé de la deuxième partie de bande fibreuse formant partie de raccordement entre deux préformes d'aubes consécutives à travers un segment non tissé de la première ou de la troisième partie de préforme, un tissage dudit segment non tissé de la deuxième partie de préforme fibreuse est réalisé.

Ce tissage complémentaire peut être réalisé avec liaison entre des fils du premier ensemble de fils dans ledit segment non tissé de la deuxième partie de préforme fibreuse et des fils du premier ensemble de fils dans ledit segment non tissé de la première ou de la troisième partie de préforme.

Selon une particularité du procédé, à son extrémité opposée à celle adjacente à la deuxième partie de bande fibreuse, la première partie de bande fibreuse est prolongée par une quatrième partie de bande fibreuse tissée sur toute sa longueur pour former, après enroulement sur elle-même, une doublure intérieure de la virole intérieure.

Dans ce cas, on peut prévoir que la réalisation de la préforme fibreuse comprend le pliage vers l'intérieur de portions latérales de ladite doublure intérieure pour lui conférer une section sensiblement en forme de U.

Selon une autre particularité du procédé, à son extrémité opposée à celle adjacente à la deuxième partie de bande fibreuse, la troisième partie de bande fibreuse est prolongée par une cinquième partie de bande fibreuse tissée sur toute sa longueur pour former, après enroulement sur elle-même, une doublure extérieure de la virole extérieure.

Dans ce cas, on peut prévoir que la cinquième partie de la bande fibreuse a une largeur supérieure à celle de la troisième partie, et la réalisation de la préforme fibreuse comprend le pliage vers l'extérieur d'au moins une portion de ladite doublure extérieure faisant saillie latéralement par rapport à la troisième partie de bande fibreuse.

### Brève description des dessins

L'invention sera mieux comprise à la lecture de la description faite ci-après, à titre indicatif mais non limitatif, en référence aux dessins annexés sur lesquels :
- la figure 1 est une vue très schématique partielle d'un compresseur de turbomachine ;
- la figure 2 est une vue très schématique partielle d'une turbine basse pression de turbomachine ;
- la figure 3 est une vue simplifiée en plan d'une bande fibreuse tissée destinée à la réalisation d'une préforme fibreuse pour un redresseur de compresseur selon un mode de réalisation de l'invention ;
- les figures 4 et 5 sont des vues simplifiées en coupe transversale selon les plans IV-IV et V-V de la figure 3 ;
- les figures 6 à 12 illustrent schématiquement des étapes successives de mise en forme de la bande tissée de la figure 3 en vue d'aboutir à une préforme fibreuse de redresseur de compresseur ;
- la figure 13 est une vue très schématique en demi-coupe radiale au stade de réalisation de la préforme de redresseur de compresseur de la figure 12 ;
- la figure 14 est une vue très schématique en demi-coupe radiale de la préforme de redresseur de compresseur finalement obtenue à partir de la bande tissée de la figure 3 ;
- la figure 15 est une vue très schématique en demi-coupe radiale d'une préforme de distributeur de turbine en une seule pièce selon un mode de réalisation de l'invention ;
- la figure 16 indique des étapes successives d'un procédé de fabrication d'un redresseur de compresseur en matériau composite à matrice organique selon l'invention, ayant un renfort fibreux formé par une préforme fibreuse telle que par exemple celle de la figure 14 ; et
- la figure 17 indique des étapes successives d'un procédé de fabrication d'un redresseur de compresseur ou d'un distributeur de turbine en CMC ayant un renfort fibreux formé par une préforme fibreuse telle que par exemple celle de la figure 14 ou celle de la figure 15.

### Description détaillée de modes de réalisation de l'invention

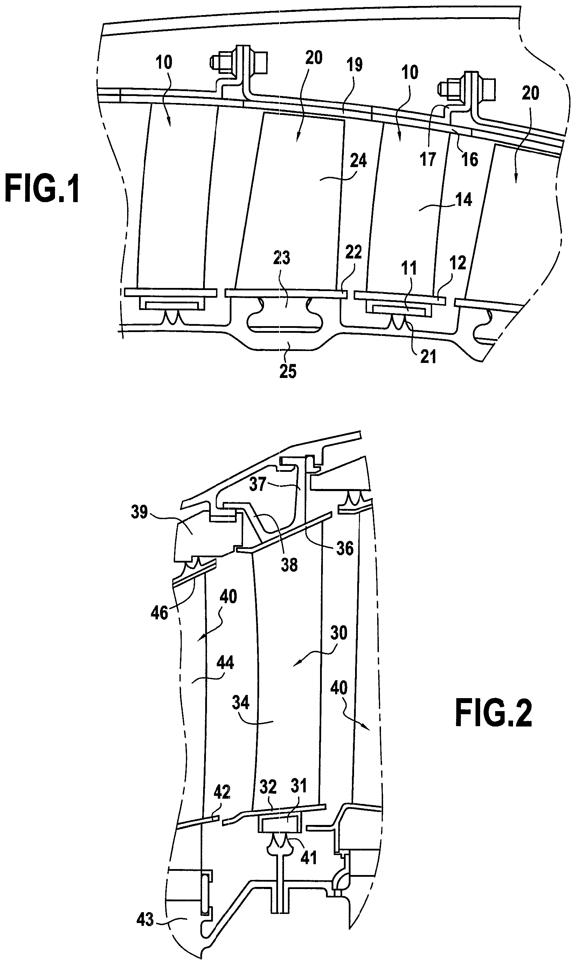

La figure 1 est une vue très schématique en demi-coupe axiale partielle montrant un compresseur multi-étages de turbomachine. Le compresseur comprend des redresseurs fixes 10 alternant avec des roues mobiles 20.

Chaque redresseur 10 comprend une virole intérieure 12, une pluralité d'aubes ou pales 14 et une virole extérieure 16. Les aubes 14 s'étendent sensiblement radialement entre la virole intérieure 12 et la virole extérieure 16 et sont réparties angulairement de façon régulière. A leurs extrémités radiales intérieures et extérieures, les aubes 14 sont solidaires des viroles 12 et 16, respectivement. Du côté intérieur, la virole intérieure 12 porte un revêtement abradable 11. Du côté extérieur, la virole extérieure 16 est solidaire d'une bride 17 pour fixation au carter de compresseur, par exemple au voisinage de son extrémité aval. Le terme aval est utilisé en référence au sens d'écoulement de l'air dans le compresseur.

Chaque roue mobile 20 comprend des aubes 24 ayant une plate-forme interne 22. Sous la plate-forme interne 22, chaque aube se prolonge par un pied 23 engagé dans un logement d'un rotor 25. Le rotor 25 supporte en outre des léchettes 21 en regard du revêtement abradable 11 d'un redresseur adjacent. A leurs extrémités extérieures, les aubes 24 peuvent également présenter des léchettes (non représentées) en regard d'un revêtement abradable porté par un anneau 19 supporté par le carter de compresseur.

Les faces externes des viroles intérieures 12 des redresseurs 10 et des plates-formes internes 22 des aubes des roues mobiles 20, et les faces internes des viroles extérieures 16 des redresseurs 10 et des anneaux 19 définissent la veine d'écoulement d'air dans le compresseur, les léchettes coopérant avec les revêtements abradables associés pour assurer l'étanchéité du côté intérieur et aux sommets des aubes des roues mobiles 20.

Un agencement de compresseur tel que succinctement décrit ci-avant est bien connu.

La figure 2 est une vue schématique en demi-coupe axiale partielle montrant une turbine basse-pression multi-étages de turbomachine. La turbine comprend des distributeurs fixes 30 alternant avec des roues mobiles 40.

Chaque distributeur 30 comprend une virole intérieure 32, une pluralité d'aubes ou pales 34 et une virole extérieure 36. Les aubes 34 s'étendent sensiblement radialement entre la virole intérieure 32 et la virole extérieure 36 et sont réparties angulairement de façon régulière. A leurs extrémités intérieures et extérieures, les aubes 34 sont solidaires des viroles 32 et 36, respectivement. Du côté intérieur, la virole intérieure 32 porte un revêtement abradable 31. Du côté extérieur, la virole extérieure 36 est solidaire d'une bride 37 pour liaison avec le carter de turbine 39, par exemple au voisinage de l'extrémité aval de la virole 36, et d'une pièce 38 formant becquet de centrage au voisinage de l'extrémité amont.

Chaque roue mobile 40 comprend des aubes 44 ayant une plate-forme interne 42 et une plate-forme externe ou talon 46. Sous la plate-forme interne, chaque aube se prolonge par un pied engagé dans un logement d'un disque 43. Le disque 43 supporte des léchettes 41 en regard du revêtement abradable 31 d'un distributeur adjacent. Du côté extérieur, les talons 46 supportent des léchettes en regard d'un revêtement abradable porté par un anneau 39 supporté par le carter de turbine.

Les faces externes des viroles intérieures 32 des distributeurs 30 et des plates-formes internes 42 des aubes des roues mobiles 40, et les faces internes des viroles extérieures 36 des distributeurs 30 et des talons 46 des aubes des roues mobiles 40 définissent la veine d'écoulement de gaz dans la turbine, les léchettes coopérant avec les revêtements abradables associés pour assurer l'étanchéité du côté intérieur et aux sommets des aubes des roues mobiles 40.

Un agencement de turbine basse pression tel que succinctement décrit ci-avant est bien connu.

Une pièce de turbomachine formant un redresseur de compresseur ou un distributeur de turbine et susceptible par exemple d'être utilisée dans un compresseur ou une turbine tels que ceux des figures 1 et 2, est réalisée en matériau composite avec un renfort fibreux comprenant des fils s'étendant continûment dans plusieurs aubes successives en passant par les viroles intérieure et extérieure.

Un mode de réalisation d'une préforme fibreuse pour une telle pièce de turbomachine, par exemple un redresseur de compresseur de forme analogue à celle d'un redresseur 10 de la figue 1, sera maintenant décrit, la pièce finale étant obtenue par densification de la préforme fibreuse par une matrice.

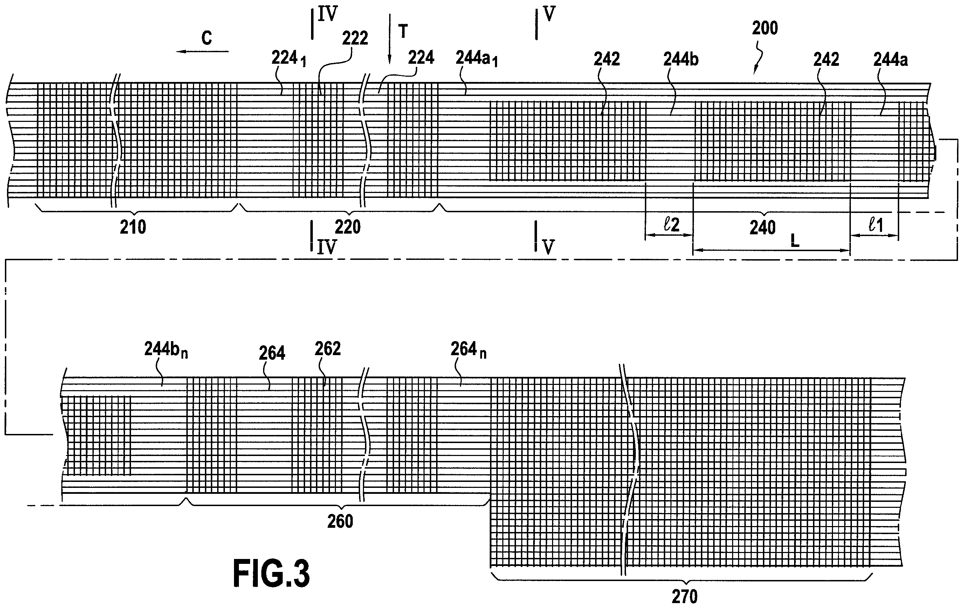

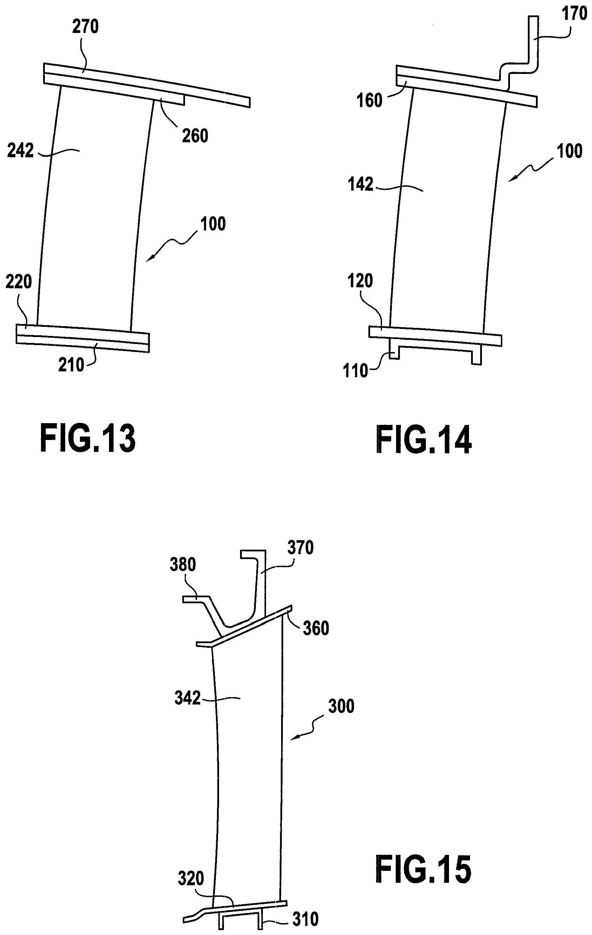

Différentes opérations permettant d'aboutir à une préforme fibreuse 100 telle que montrée sur la figure 14, décrite en détail plus loin, seront détaillées en référence aux figures 3 à 13.

La figure 3 montre en plan une bande fibreuse tissée 200 permettant, après différents stades de mise en forme, d'obtenir la préforme fibreuse 100 désirée. Dans cet exemple, la bande 200 est tissée longitudinalement en sens chaîne (flèche C). Les parties tissées avec des fils de trame (sens T) sont représentées en quadrillé. Dans les autres parties non tissées seuls les fils de chaîne sont représentés.

La bande 200 comprend une première partie 220 destinée à former une partie de préforme de virole intérieure, une deuxième partie 240 comprenant des parties destinées à former les parties de préformes d'aubes et une troisième partie 260 destinée à former une partie de préforme de virole extérieure, la partie 240 prolongeant immédiatement la partie 220 tandis que la partie 260 prolonge immédiatement la partie 240. A son extrémité longitudinale opposée à celle adjacente à la partie 240, la partie 220 peut être prolongée immédiatement par une partie 210 destinée à former une partie de préforme de doublure interne de virole intérieure. De façon similaire, à son extrémité longitudinale opposée à celle adjacente à la partie 240, la partie 260 peut être prolongée immédiatement par une partie 270 destinée à former une partie de préforme de doublure externe de virole extérieure.

La bande 200 constituée par les parties 210, 220, 240, 260, 270 est destiné, après mise en forme comme décrit plus loin, à constituer la préforme fibreuse 100. Bien entendu, plusieurs bandes 200 peuvent être tissées en continu, étant ensuite individuellement découpées pour former des préformes 100.

Les parties 210 et 270 sont tissées sur toute leur longueur, sans interruption du tissage.

La partie 220 est formée de segments tissés 222 alternant avec des segments non tissés 224 (c'est-à-dire comprenant uniquement des fils de chaîne) et a une longueur correspondant à la circonférence de la virole intérieure du redresseur à réaliser. Le nombre total de segments 222 et 224 correspond au nombre des aubes du redresseur à réaliser. Les segments tissés 222 ont tous même longueur. De même les segments non tissés 224 ont tous même longueurs, la longueur des segments 224 étant sensiblement égale ou un peu supérieure à celle des segments 222 comme expliqué plus loin.

La partie 240 est formée de segments tissés 242 alternant avec des segments non tissés, alternativement 244a et 244b. Les segments 242 sont destinés à constituer des parties de préformes d'aubes. Ils sont en nombre égal à celui des aubes du redresseur de compresseur à réaliser et ont une longueur L sensiblement égale à la dimension radiale des aubes. Les segments 244a ont une même longueur ℓ1 correspondant à la distance du raccordement entre deux extrémités intérieures d'aubes voisines en passant à travers la virole intérieure, comme expliqué plus loin. Les segments 244b ont une même longueur ℓ2 correspondant à la distance du raccordement entre deux extrémités extérieures d'aubes voisines, en passant à travers la virole extérieure, comme expliqué plus loin.

La partie 260 est formée de segments tissés 262 alternant avec des segments non tissés 264 et a une longueur correspondant à celle de la virole extérieure du redresseur à réaliser. Le nombre total de segments 262 et 264 correspond à celui des aubes du redresseur à réaliser. Les segments 262 ont tous même longueur. De même, les segments 264 sont tous même longueur, la longueur des segments 264 étant sensiblement égale ou un peu supérieure à celle des segments 262, comme expliqué plus loin.

La largeur de la partie 220 correspond à la dimension axiale de la virole intérieure tandis que la largeur de la partie 260 correspond à la dimension axiale de la virole extérieure, ces deux dimensions étant dans l'exemple considéré sensiblement égales.

La largeur des segments tissés 242 de la partie 240 correspond à la largeur maximale d'une aube en projection à plat. Elle est ici inférieure aux largeurs des parties 220 et 260, des fils de chaîne adjacents aux bords longitudinaux de la partie 240 de la bande 200 n'étant donc pas tissés.

La largeur de la partie 210 est sensiblement égale à celle des parties 220 et 260.

La largeur de la partie 270 est supérieure à celle de la partie 260, ce qui est obtenu par ajout de fils de chaîne d'un côté ou de chaque côté de la bande 200 selon le profil de la partie de préforme à réaliser à partir de la partie de bande 270. Dans l'exemple illustré, des fils de chaîne sont ajoutés sur un seul côté.

Le tissage, dans les parties tissées de la bande 200, est un tissage tridimensionnel ou multi-couches, avec plusieurs couches de fils de chaîne et plusieurs couches de fils de trame et avec des fils de trame d'une même couche de fils de trame liant ensemble des fils de chaîne de plusieurs couches de fils de chaîne.

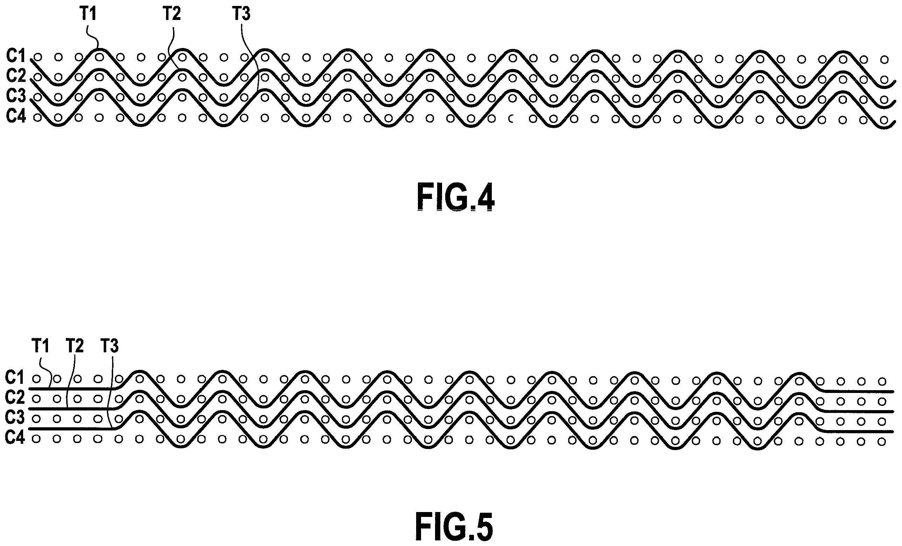

Le tissage peut être réalisé avec une armure de type interlock comme illustré sur les figures 4 et 5 qui montrent des plans de tissage au niveau d'un segment tissé 222 et d'un segment tissé 242, respectivement. D'autres armures de tissage multi-couches peuvent être choisies, par exemple des armures de type multi-satin, multi-sergé ou multi-toile. On pourra se référer au document WO 2006/136755. On notera que le tissage pourrait aussi être réalisé avec plusieurs armures différentes, en particulier avec des armures de tissage bidimensionnel de type satin au niveau des couches externes de fils de chaîne, au moins dans la partie 240, pour conférer un aspect de surface lisse aux parties de préformes d'aubes.

Dans l'exemple illustré, la bande fibreuse 200 est tissée avec quatre couches de fils de chaîne C1, C2, C3, C4 et trois couches de fils de trame T1, T2, T3. Bien entendu, le nombre de couches de fils de chaîne et le nombre correspondant de couches de fils de trame pourront prendre d'autres valeurs en fonction de l'épaisseur désirée de la bande 200 pour des fils de titre donné. L'épaisseur de la bande fibreuse 200 correspond à la plus grande épaisseur parmi celles des parties de préforme à réaliser. Dans le cas de parties de préférence ayant une épaisseur plus faible que celle d'autres parties, par exemple les parties de préformes d'aube, le tissage dans la partie 240 correspondante de la bande 200 peut être réalisé sur un nombre restreint de couches de fils de chaîne. Les tronçons de fils de chaîne qui s'étendent sur toute la longueur de la partie 240 sans être tissés, le long des bords longitudinaux (figure 5) et éventuellement dans l'épaisseur peuvent être éliminés après tissage de la bande 200 et avant sa mise en forme.

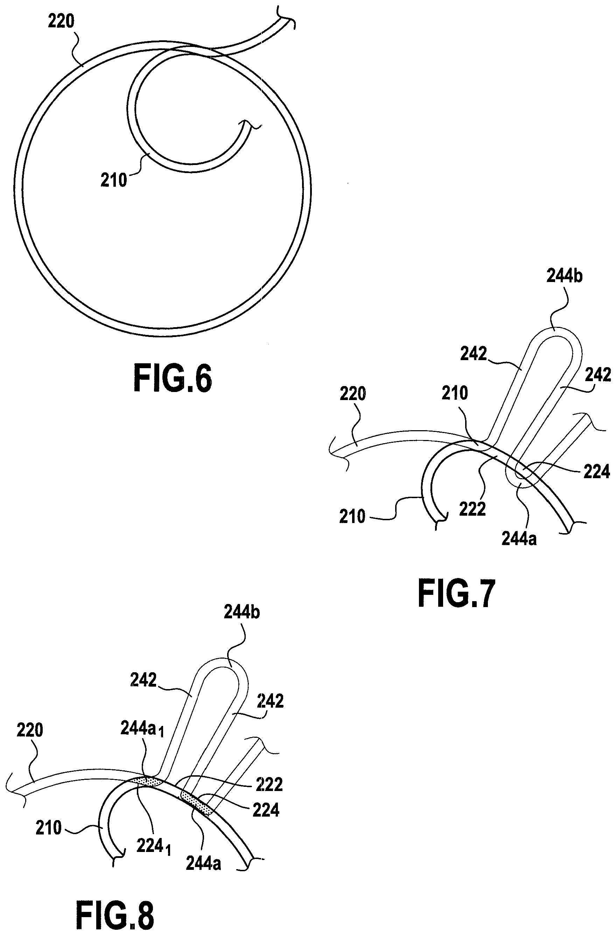

La réalisation d'une préforme 100 à partir d'une bande tissée 200 sera maintenant décrite en référence aux figures 6 à 12.

Une première étape (figure 6) comprend l'enroulement de la partie 220 sur une circonférence complète tandis que la partie 210 est enroulée sur elle-même en réserve.

Dans une deuxième étape (figure 7), la partie 240 est repliée "en accordéon" tout autour de l'axe de la partie enroulée 220 avec les segments tissés 242 s'étendant radialement et les segments non tissés 244a passant à travers les segments non tissés 224 pour ressortir du côté intérieur de la partie enroulée 220. Les segments tissés 242 sont destinés à former des parties de préformes d'aubes.

Dans une troisième étape (figure 8), les segments non tissés 244a, formant raccordements entre segments 242 du côté intérieur, sont tissés pour les immobiliser par rapport à la partie enroulée 220. Ce tissage complémentaire (schématisé par des points) est réalisé avec des fils de trame rapportés, selon une armure de tissage tridimensionnel ou multi-couches. Avantageusement, on réalise un tissage assurant une liaison entre eux de fils de chaîne de différentes couches de fils de chaîne des segments non tissés 244a et assurant une liaison entre fils de chaîne de couches de fils de chaîne des segments non tissés 244a et fils de chaîne de couches de fils de chaîne des segments non tissés 224 pour solidariser les extrémités intérieures des segments tissés 242 avec la partie 220, c'est-à-dire pour solidariser les parties de préformes d'aubes avec la partie de préforme de virole intérieure. On notera que l'enroulement de la partie 220 sur elle-même se termine par une inter-pénétration du premier segment non tissé 224₁, de la partie 220 (dans le sens chaîne) avec le premier segment non tissé 244a₁, de la partie 240, les segments 224₁ et 244a₁ faisant aussi l'objet d'un tissage complémentaire.

Dans l'exemple illustré, les segments non tissés 244a s'intègrent complètement dans les segments non tissés 224. Cette intégration pourrait être partielle, avec une partie des segments 244a faisant saillie du côté intérieur par rapport à la partie 220.

Le tissage complémentaire des segments 244a peut être réalisé après le repliage complet de la partie 240 ou au fur et à mesure de ce repliage.

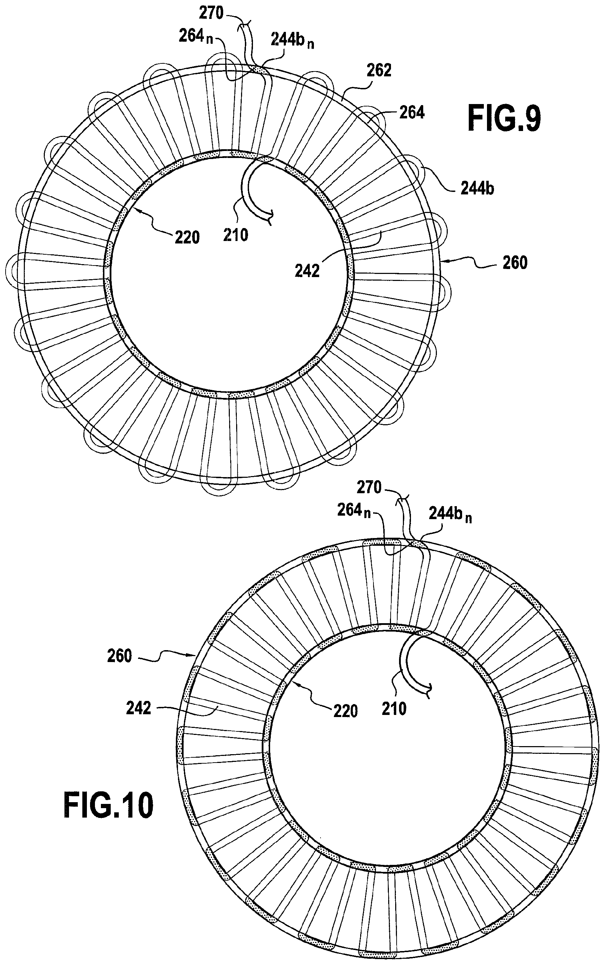

Dans une quatrième étape (figure 9), la partie 260 est enroulée sur une circonférence complète tandis que la partie 270 est enroulée sur elle-même en réserve. L'enroulement de la partie 260 est réalisé en faisant passer les segments non tissés 244b de la partie 240 à travers les segments non tissés 264 pour ressortir du côté extérieur de la partie enroulée 260.

Dans une cinquième étape (figure 10), les segments non tissés 244b, formant raccordements entre segments 242 du côté extérieur, sont tissés pour les immobiliser par rapport à la partie enroulée 260. En variante, ce tissage peut être réalisé au fur et à mesure de l'enroulement de la partie 260. Ce tissage complémentaire est réalisé avec des fils de trame rapportés, selon une armure de tissage tridimensionnel ou multi-couches. Avantageusement, on réalise un tissage assurant une liaison entre eux de fils de chaîne de différentes couches de fils de chaîne des segments non tissés 244b, et assurant une liaison entre fils de chaîne de couches de fils de chaîne des segments non tissés 244b et fils de chaîne de couches de fils de chaîne des segments non tissés 264 pour solidariser les extrémités extérieures des segments tissés 222 avec la partie 260, c'est-à-dire pour solidariser les parties de préformes d'aubes avec la partie de préforme de virole extérieure. On notera que l'enroulement de la partie 260 sur elle-même se termine par une inter-pénétration du dernier segment non tissé 244bₙ de la partie 240 avec le dernier segment non tissé 264ₙ de la partie 260, ces deux segments faisant aussi l'objet d'un tissage complémentaire. Dans l'exemple illustré, les segments non tissés 244b s'intègrent complètement dans les segments non tissés 264. Cette intégration pourrait être partielle avec une partie des segments 244b faisant saillie du côté extérieur par rapport à la partie 260.

Les tissages complémentaires aux troisième et cinquième étapes peuvent être réalisés manuellement.

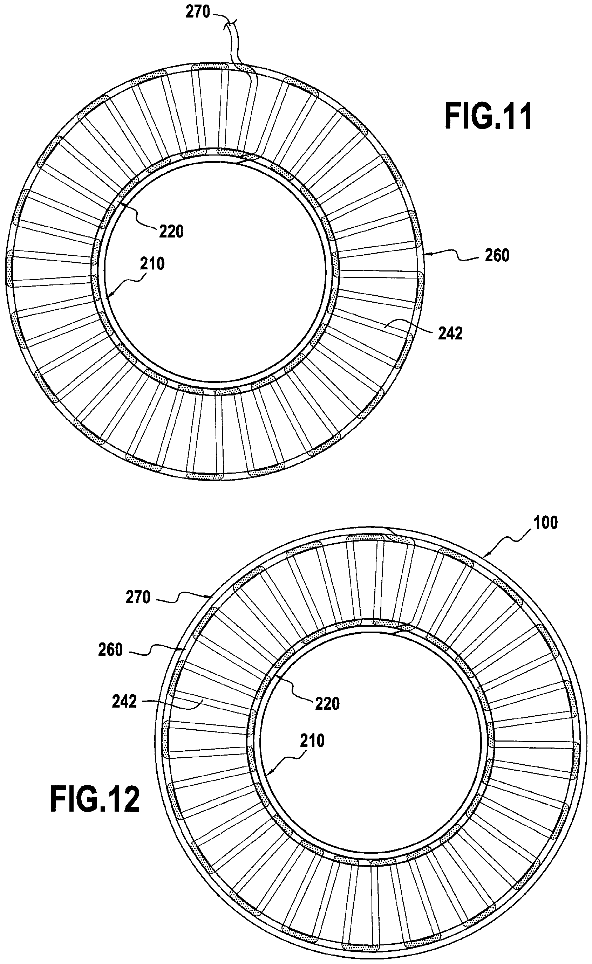

Dans une sixième étape (figure 11), la partie 210 est enroulée sur une circonférence complète au contact de la partie enroulée 220, pour former une partie de préforme de doublure interne de virole intérieure.

Dans une septième étape (figure 12), la partie 270 est enroulée sur une circonférence complète au contact de la partie enroulée 260, pour former une partie de préforme de doublure externe de virole extérieure. Une liaison, par exemple par couture, peut éventuellement être réalisée entre les parties enroulées 210 et 220 de même qu'entre les parties enroulées 270 et 260.

La figure 13 est une vue en demi-coupe radiale à ce stade de réalisation de la préforme fibreuse 100.

On notera que la mise en forme de la bande fibreuse peut être réalisée avec l'assistance d'un outillage de maintien, comprenant par exemple des tiges sur lesquelles passent les segments non tissés 244a, 244b lors du repliage de la partie 240, lesquelles tiges sont retirées pour permettre le tissage complémentaire de ces segments non tissés aux troisième et cinquième étapes.

Les parties tissées 242 destinées à constituer les parties de préformes d'aubes sont équidistantes à leurs extrémités intérieures et extérieures. Par conséquent, les segments non tissés 224 de la partie 220 peuvent avoir une longueur légèrement supérieure à celle des segments tissés 222 pour prendre en compte l'épaisseur de la bande fibreuse 200. De même, dans la partie 260, les segments non tissés 264 peuvent avoir une longueur légèrement supérieure à celle des segments tissés 262 pour prendre en compte l'épaisseur de la bande tissée 200. On pourrait aussi réaliser les parties 220 et 260 avec des segments tissés ayant sensiblement même longueur que les segments non tissés, les parties 220 et 260 étant tissées avec une longueur un peu inférieure à leur circonférence finale après enroulement et étant enroulées avec une tension exercée vers l'extérieur.

Une conformation est ensuite réalisée dans un outillage de conformation pour obtenir la préforme 100 (figure 14) ayant une forme voisine de celle du redresseur à réaliser. Lors de cette conformation, on confère aux préformes d'aubes 142 correspondant aux parties tissées 242 le profil souhaité, on met en forme la doublure intérieure 210 pour lui donner une section en U et obtenir une partie de préforme 110 définissant un logement pour du matériau abradable du côté intérieur de la partie de préforme 120 de virole intérieure et on met en forme la doublure extérieure 270 pour obtenir une partie de préforme 170 de bride de fixation du côté extérieur de la partie de préforme 160 de virole extérieure.

La largeur de la partie tissée 210 est choisie en fonction des dimensions souhaitées pour la partie de préforme 211. Elle est ici égale à celle de la partie 220. La largeur de la partie 270 est ici supérieure à celle de la partie 260 pour pouvoir former la partie de préforme de bride 170.

La figure 15 montre une préforme fibreuse 300 de distributeur de turbine ayant par exemple une forme analogue à celle d'un distributeur 30 de la figure 2. La préforme 300 est obtenue par un procédé semblable à celui décrit ci-avant en référence aux figures 3 à 14. La préforme 300 comprend une partie de préforme 310 destinée à former un logement de revêtement abradable, une partie de préforme 320 de virole intérieure, des parties de préformes 342 d'aubes du distributeur, une partie de préforme 360 de virole extérieure et des parties de préformes 370 et 380 pour une bride de fixation et un becquet de centrage du côté extérieur de la virole extérieur.

Un redresseur de compresseur ou un distributeur de turbine en matériau composite est finalement obtenu par densification de la préforme 100 ou 300 par une matrice. Les matériaux constitutifs des fibres de la préforme fibreuse et de la matrice sont choisis en fonction des conditions d'utilisation. Dans le cas d'un redresseur de compresseur, au moins dans les premiers étages amont de compresseur, un matériau composite réalisé avec des fibres de carbone ou de verre et une matrice organique (polymère) peut être utilisé. Lorsque la température d'utilisation est élevée, notamment pour un distributeur de turbine ou des redresseurs de compresseur dans les étages aval de compresseur, un matériau composite à matrice céramique (CMC) est utilisé avec des fibres de carbone ou de céramique et une matrice céramique.

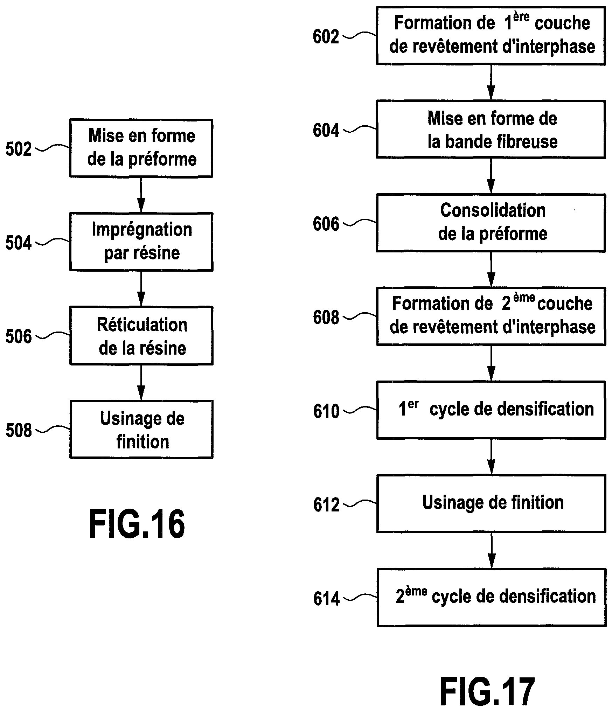

Dans le cas d'une pièce en matériau composite à matrice organique (figure 16), la bande fibreuse 200 est mise en forme dans son outillage de conformation (étape 502), la préforme obtenue est imprégnée par une résine par injection ou infusion (étape 504) et un traitement thermique de réticulation de la résine est effectué (étape 506). Ensuite, un usinage de finition peut être réalisé (étape 508) en particulier au niveau des viroles intérieure et extérieure, du logement d'abradable, de la bride de fixation et du becquet de centrage. La résine est une résine précurseur de matrice polymère telle qu'une résine époxyde, bismaléimide ou polyimide, par exemple.

Dans le cas d'une pièce en CMC (figure 17), une mince première couche de revêtement d'interphase de défragilisation du matériau CMC est formée sur les fibres de la bande fibreuse tissée 200 (étape 602), avant sa mise en forme. La couche de revêtement d'interphase, par exemple en carbone pyrolytique (PyC), nitrure de bore (BN) ou carbone dopé au bore (BC) est formée par infiltration chimique en phase gazeuse ou CVI ("Chemical Vapor Infiltration") avec une épaisseur relativement faible, par exemple au plus égale à 100 nanomètres, pour préserver la capacité de déformation de la bande fibreuse.

La bande fibreuse 200 munie de la première couche de revêtement d'interphase est mise en forme à l'aide d'un outillage de conformation (étape 604) pour obtenir une préforme telle que 100 ou 300. La préforme est consolidée dans sa forme (étape 606) en étant maintenue dans l'outillage de conformation. La consolidation est réalisée par imprégnation, par infiltration ou injection, par une résine précurseur de carbone, par exemple une résine phénolique ou furanique ou une résine précurseur de céramique, par exemple une résine polysilazane ou polysiloxane précurseur de carbure de silicium SiC. Après réticulation et pyrolyse de la résine, la préforme consolidée peut être retirée de l'outillage de conformation. La quantité de résine de consolidation est choisie pour que le résidu de pyrolyse soit suffisant, de préférence juste suffisant, pour lier entre elles les fibres de la préforme afin que celle-ci soit manipulable en conservant sa forme sans l'assistance d'un outillage de maintien.

Après consolidation, une deuxième couche de revêtement d'interphase peut être formée par CVI (étape 608) afin d'obtenir une interphase globale fibres-matrice d'épaisseur suffisante pour assurer la fonction de défragilisation du matériau CMC, la deuxième couche de revêtement d'interphase étant par exemple en PyC, BN ou BC et ayant une épaisseur de préférence au moins égale à 100 nanomètres.

Ensuite, une densification par une matrice céramique est réalisée. La densification peut être réalisée par CVI. La matrice est par exemple en SiC ou est une matrice auto-cicatrisante par exemple comprenant des phases de matrice en un système ternaire Si-B-C ou en carbure de bore B₄C. Les documents US 5 246 736 et US 5 965 266 décrivent l'obtention par CVI de telles matrices cicatrisantes. La densification par CVI peut être réalisée en deux cycles 610, 614 séparés par une étape 612 d'usinage de finition de la pièce.

Un procédé du type de celui décrit ci-avant en référence à la figure 17 est connu en soi. On pourra se référer au document US 2010/0015428 et au document WO 2010/103213 qui décrit un tel procédé pour la fabrication d'un ensemble d'anneau de turbine en CMC.

La pièce monobloc obtenue après densification peut être utilisée telle quelle comme redresseur complet de compresseur ou distributeur complet de turbine. En variante, notamment dans le cas d'un distributeur de turbine, la pièce peut être découpée en secteurs comprenant chacun un secteur de virole intérieure, un secteur de virole extérieure et au moins deux aubes, voire au moins trois aubes, lorsque cela est requis notamment pour faciliter de montage.

Ainsi tant dans le cas d'une pièce monobloc que dans le cas de secteurs, l'invention est remarquable en ce que le mode de réalisation de la préforme permet d'avoir une continuité de fils du renfort fibreux le long d'un trajet parcourant longitudinalement au moins deux aubes consécutives en passant dans la virole intérieure et dans la virole extérieure, ou parcourant longitudinalement au moins trois aubes consécutives en passant alternativement dans la virole intérieure et dans la virole extérieure, une telle continuité contribuant à conférer une tenue mécanique élevée. Il y a en outre continuité de fils du renfort fibreux le long des segments de virole intérieure et de virole extérieure entre lesquels s'étendent les au moins deux ou au moins trois aubes consécutives.

Dans le cas d'une pièce formant redresseur de compresseur ou distributeur de turbine monobloc, le renfort fibreux comprend des fils qui s'étendent continûment le long d'un trajet parcourant l'une des viroles intérieure et extérieure sur sa circonférence puis successivement la totalité des aubes - en passant de l'une à l'autre alternativement à travers la virole extérieure et la virole intérieure -, puis parcourant l'autre virole.

## Revendications

1. Pièce de turbomachine formant redresseur (10) de compresseur ou distributeur (30) de turbine et comprenant une virole intérieure (12;32), une virole extérieure (16;36) et des aubes (14;34) s'étendant sensiblement radialement entre les viroles intérieure et extérieure en étant solidaires de celles-ci,
pièce dans laquelle la virole intérieure, la virole extérieure et les aubes forment une seule pièce en matériau composite ayant un renfort fibreux tissé densifié par une matrice, et le renfort fibreux comprend un ensemble de fils s'étendant continûment le long d'un trajet parcourant longitudinalement les aubes en passant dans la virole intérieure et dans la virole extérieure, **caractérisée en ce que** lesdites aubes s'étendent entre la virole intérieure et la virole extérieure avec des fils du renfort fibreux tissé (210, 220) parcourant une circonférence complète de la virole intérieure et des fils de renfort fibreux tissé (260, 270) parcourant une circonférence complète de la virole extérieure.

2. Pièce de turbomachine selon la revendication 1, dans laquelle le renfort fibreux comprend un ensemble de fils s'étendant continûment le long d'un trajet parcourant l'une des viroles intérieure et extérieure sur sa circonférence, puis successivement la totalité des aubes, puis parcourant l'autre des viroles intérieure et extérieure sur sa circonférence.

3. Pièce de turbomachine selon l'une quelconque des revendications 1 à 2, comprenant en outre une bride (170) solidaire de la virole extérieure (160) et s'étendant radialement vers l'extérieur à partir de celle-ci.

4. Pièce de turbomachine selon l'une quelconque des revendications 1 à 3, comprenant en outre une partie solidaire de la virole intérieure (120) et définissant du côté intérieur de celle-ci un logement à section transversale sensiblement en forme de U (110), s'ouvrant vers l'intérieur.

5. Pièce de turbomachine selon l'une quelconque des revendications 1 à 4, réalisée en matériau composite à matrice céramique.

6. Procédé de fabrication d'une pièce de turbomachine formant redresseur de compresseur ou distributeur de turbine avec une virole intérieure, une virole extérieure et des aubes s'étendant sensiblement radialement entre les viroles intérieure et extérieure en étant solidaires de celles-ci, le procédé comprenant :
- la réalisation d'une préforme fibreuse tissée (100) comprenant un premier ensemble de fils qui, de façon continue, parcourent la circonférence complète d'une première partie de préforme formant préforme de la virole intérieure (120;220), ainsi que, successivement et en direction longitudinale, des deuxièmes parties de préforme formant préformes d'aubes (142;242), et aussi la circonférence complète d'une troisième partie de préforme formant préforme de la virole extérieure (160;260), les fils du premier ensemble de fils parcourant successivement lesdites deuxièmes parties de préforme en passant d'une deuxième partie de préforme à la suivante alternativement à travers la première partie de préforme et à travers la troisième partie de préforme, et
- la densification de la préforme fibreuse par une matrice.

7. Procédé selon la revendication 6, dans lequel la réalisation de la préforme fibreuse comprend :
(1) le tissage d'une bande fibreuse (200) avec le premier ensemble de fils s'étendant continûment dans la direction longitudinale de la bande et comprenant plusieurs couches de fils parallèles entre eux (C1,C2,C3,C4), et un deuxième ensemble de fils (T1,T2,T3) réalisant un tissage avec les fils du premier ensemble le long de segments tissés de la bande fibreuse séparés les uns des autres par des segments non tissés, la bande fibreuse comprenant :
• une première partie (220) de bande fibreuse s'étendant sur une longueur correspondant à celle de la première partie de préforme, la première partie de bande fibreuse étant formée de segments tissés (222) alternant avec des segments non tissés (224),
• une deuxième partie (240) de bande fibreuse suivant immédiatement la première partie et formée des segments tissés (242) alternant avec des segments non tissés (244a,244b), les segments tissés de la deuxième partie de bande fibreuse correspondant aux deuxièmes parties de préforme et ayant une longueur (L) correspondant à la dimension longitudinale des aubes, et les segments non tissés de la deuxième partie de bande fibreuse formant des parties de raccordement entre préformes d'aubes consécutives, et
• une troisième partie (260) de bande fibreuse suivant immédiatement la deuxième partie (240) et s'étendant sur une longueur correspondant à celle de la troisième partie de préforme, la troisième partie de bande fibreuse étant formée de segments tissés (262) alternant avec des segments non tissés (264),
• le nombre total de segments tissés et non tissés dans chacune des première et troisième partie étant égal à celui des aubes, et
(2) la mise en forme de la bande fibreuse comprenant :
• l'enroulement sur elle-même de la première partie (220) de bande fibreuse,
• le pliage de la deuxième partie (240) de bande fibreuse pour disposer les segments tissés de celle-ci sensiblement radialement par rapport à la première partie de bande fibreuse enroulée sur elle-même, et
• l'enroulement sur elle-même de la troisième partie (260) de bande fibreuse,
• les segments non tissés (244a,244b) de la deuxième partie de bande fibreuse formant parties de raccordement entre préformes d'aubes consécutives étant engagés à travers les segments non tissés alternativement de la première partie de bande fibreuse enroulée et de la troisième partie de bande fibreuse enroulée.

8. Procédé selon la revendication 7, dans lequel, après engagement d'un segment non tissé (244a,244b) de la deuxième partie de bande fibreuse formant partie de raccordement entre deux préformes d'aubes consécutives à travers un segment non tissé de la première ou de la troisième partie de préforme (224,264), un tissage dudit segment non tissé de la deuxième partie de préforme fibreuse est réalisé.

9. Procédé selon la revendication 8, dans lequel le tissage est réalisé avec liaison entre des fils du premier ensemble de fils dans ledit segment non tissé de la deuxième partie de préforme fibreuse et des fils du premier ensemble de fils dans ledit segment non tissé de la première ou de la troisième partie de préforme (224,264).

10. Procédé selon l'une quelconque des revendications 6 à 9, dans lequel, à son extrémité opposée à celle adjacente à la deuxième partie de bande fibreuse, la première partie de bande fibreuse est prolongée par une quatrième partie (210) de bande fibreuse tissée sur toute sa longueur pour former, après enroulement sur elle-même, une doublure intérieure de la virole intérieure.

11. Procédé selon la revendication 10, dans lequel la réalisation de la préforme fibreuse comprend le pliage vers l'intérieur de portions latérales de ladite doublure intérieure (210) pour lui conférer une section sensiblement en forme de U (110).

12. Procédé selon l'une quelconque des revendications 7 à 11, dans lequel, à son extrémité opposée à celle adjacente à la deuxième partie de bande fibreuse, la troisième partie de bande fibreuse est prolongée par une cinquième partie (270) de bande fibreuse tissée sur toute sa longueur pour former, après enroulement sur elle-même, une doublure extérieure de la virole extérieure.

13. Procédé selon la revendication 12, dans lequel la cinquième partie de la bande fibreuse a une largeur supérieure à celle de la troisième partie, et la réalisation de la préforme fibreuse comprend le pliage vers l'extérieur d'au moins une portion (170) de ladite doublure extérieure faisant saillie latéralement par rapport à la troisième partie de bande fibreuse.

## Patentansprüche

1. Teil einer Turbomaschine, das einen Leitapparat (10) eines Kompressors oder ein Leitrad (30) einer Turbine bildet und einen Innenring (12; 32), einen Außenring (16; 36) sowie Schaufeln (14; 34) umfasst, die sich zwischen dem Innen- und dem Außenring im Wesentlichen radial erstrecken und dabei mit diesen fest verbunden sind,
Teil, bei dem der Innenring, der Außenring und die Schaufeln ein einziges Teil aus Verbundwerkstoff bilden, das eine durch eine Matrix verdichtete gewebte Faserverstärkung aufweist, und die Faserverstärkung eine Anordnung von Fäden umfasst, die sich kontinuierlich entlang eines Weges erstrecken, der unter Hineinlaufen in den Innenring und in den Außenring die Schaufeln in Längsrichtung durchläuft, **dadurch gekennzeichnet, dass** sich die Schaufeln zwischen dem Innenring und dem Außenring erstrecken, wobei Fäden der gewebten Faserverstärkung (210, 220) über einen vollen Umfang des Innenrings verlaufen und Fäden der gewebten Faserverstärkung (260, 270) über einen vollen Umfang des Außenrings verlaufen.

2. Turbomaschinenteil nach Anspruch 1, bei dem die Faserverstärkung eine Anordnung von Fäden umfasst, die sich kontinuierlich entlang eines Weges erstrecken, der einen der Innen- und Außenringe an seinem Umfang, anschließend nacheinander alle Schaufeln durchläuft, dann den anderen der Innen- und Außenringe an seinem Umfang durchläuft.

3. Turbomaschinenteil nach einem der Ansprüche 1 bis 2, ferner umfassend einen Flansch (170), der mit dem Außenring (160) fest verbunden ist und sich von diesem aus radial nach außen erstreckt.

4. Turbomaschinenteil nach einem der Ansprüche 1 bis 3, ferner umfassend einen Teil, der mit dem Innenring (120) fest verbunden ist und auf dessen Innenseite eine Aufnahme mit im Wesentlichen U-förmigem Querschnitt (110), welche sich nach innen hin öffnet, definiert.

5. Turbomaschinenteil nach einem der Ansprüche 1 bis 4, das aus Keramikmatrix-Verbundwerkstoff hergestellt ist.

6. Verfahren zur Herstellung eines Teils einer Turbomaschine, das einen Leitapparat eines Kompressors oder ein Leitrad einer Turbine bildet, mit einem Innenring, einem Außenring sowie Schaufeln, die sich zwischen dem Innen- und dem Außenring im Wesentlichen radial erstrecken und dabei mit diesen fest verbunden sind, wobei das Verfahren umfasst:
- das Herstellen eines gewebten Faservorformlings (100), der eine erste Anordnung von Fäden umfasst, die den vollen Umfang eines ersten Teils des Vorformlings, welcher einen Vorformling des Innenrings (120; 220) bildet, sowie nacheinander und in Längsrichtung zweite Vorformlingteile, welche Vorformlinge von Schaufeln (142; 242) bilden, und auch den vollen Umfang eines dritten Vorformlingteils, welcher einen Vorformling des Außenrings (160; 260) bildet, kontinuierlich durchlaufen, wobei die Fäden der ersten Fadenanordnung nacheinander die zweiten Vorformlingteile durchlaufen und dabei von einem zweiten Vorformlingteil zum nächsten abwechselnd durch den ersten Vorformlingteil und durch den dritten Vorformlingteil laufen, und
- das Verdichten des Faservorformlings durch eine Matrix.

7. Verfahren nach Anspruch 6, bei dem das Herstellen des Faservorformlings umfasst:
(1) das Weben einer Faserbahn (200), wobei sich die erste Fadenanordnung kontinuierlich in der Längsrichtung der Bahn erstreckt und mehrere parallel zueinander verlaufende Fadenlagen (C1, C2, C3, C4) umfasst, und wobei eine zweite Fadenanordnung (T1, T2, T3) ein Verweben mit den Fäden der ersten Anordnung entlang gewebter Segmente der Faserbahn vollzieht, welche durch nicht gewebte Segmente voneinander getrennt sind, wobei die Faserbahn umfasst:
• einen ersten Teil (220) der Faserbahn, der sich über eine Länge erstreckt, die derjenigen des ersten Vorformlingteils entspricht, wobei der erste Faserbahnteil von gewebten Segmenten (222) gebildet ist, die sich mit nicht gewebten Segmenten (224) abwechseln,
• einen zweiten Teil (240) der Faserbahn, der unmittelbar auf den ersten Teil folgt und der aus den gewebten Segmenten (242) gebildet ist, die sich mit nicht gewebten Segmenten (244a, 244b) abwechseln, wobei die gewebten Segmente des zweiten Faserbahnteils den zweiten Vorformlingteilen entsprechen und eine Länge (L) aufweisen, welche der Längsabmessung der Schaufeln entspricht, und wobei die nicht gewebten Segmente des zweiten Faserbahnteils Verbindungsteile zwischen aufeinanderfolgenden Schaufelvorformlingen bilden, und
• einen dritten Teil (260) der Faserbahn, der unmittelbar auf den zweiten Teil (240) folgt und der sich über eine Länge erstreckt, die derjenigen des dritten Vorformlingteils entspricht, wobei der dritte Faserbahnteil von gewebten Segmenten (262) gebildet ist, die sich mit nicht gewebten Segmenten (264) abwechseln,
• wobei die Gesamtzahl an gewebten und nicht gewebten Segmenten in jedem der ersten und dritten Teile gleich derjenigen der Schaufeln ist, und
(2) wobei das Informbringen der Faserbahn umfasst:
• das Aufwickeln des ersten Teils (220) der Faserbahn auf sich selbst,
• das Falten des zweiten Teils (240) der Faserbahn, um deren gewebte Segmente im Wesentlichen radial zu dem auf sich selbst gewickelten ersten Faserbahnteil anzuordnen, und
• das Aufwickeln des dritten Teils (260) der Faserbahn auf sich selbst,
• wobei die nicht gewebten Segmente (244a, 244b) des zweiten Faserbahnteils, die Verbindungsteile zwischen aufeinanderfolgenden Schaufelvorformlingen bilden, durch die nicht gewebten Segmente abwechselnd des aufgewickelten ersten Faserbahnteils und des aufgewickelten dritten Faserbahnteils hindurch gesteckt werden.

8. Verfahren nach Anspruch 7, bei dem nach dem Hindurchstecken eines nicht gewebten Segments (244a, 244b) des zweiten Faserbahnteils, der ein Verbindungsteil zwischen zwei aufeinanderfolgenden Schaufelvorformlingen bildet, durch ein nicht gewebtes Segment des ersten oder des dritten Vorformlingteils (224, 264) ein Weben des nicht gewebten Segment des zweiten Faserformlingteils durchgeführt wird.

9. Verfahren nach Anspruch 8, bei dem das Weben mit Verbinden zwischen Fäden der ersten Fadenanordnung in dem nicht gewebten Segment des zweiten Faservorformlingteils und Fäden der ersten Fadenanordnung in dem nicht gewebten Segment des ersten oder des dritten Vorformlingteils (224, 264) durchgeführt wird.

10. Verfahren nach einem der Ansprüche 6 bis 9, bei dem der erste Faserbahnteil an seinem Ende, das demjenigen gegenüberliegt, welches zu dem zweiten Faserbahnteil benachbart ist, durch einen vierten Teil (210) der gewebten Faserbahn über seine gesamte Länge verlängert ist, um nach dem Aufwickeln auf sich selbst eine Innenverkleidung des Innenrings zu bilden.

11. Verfahren nach Anspruch 10, bei dem das Herstellen des Faservorformlings das Einwärtsfalten von Seitenabschnitten der Innenverkleidung (210) umfasst, um ihr einem im Wesentlichen U-förmigen Querschnitt (110) zu verleihen.

12. Verfahren nach einem der Ansprüche 7 bis 11, bei dem der dritte Faserbahnteil an seinem Ende, das demjenigen gegenüberliegt, welches zu dem zweiten Faserbahnteil benachbart ist, durch einen fünften Teil (270) der gewebten Faserbahn über seine gesamte Länge verlängert ist, um nach dem Aufwickeln auf sich selbst eine Außenverkleidung des Außenrings zu bilden.

13. Verfahren nach Anspruch 12, bei dem der fünfte Teil der Faserbahn eine Breite aufweist, die größer als diejenige des dritten Teils ist, und das Herstellen des Faservorformlings das Auswärtsfalten von wenigstens einem Abschnitt (170) der Außenverkleidung umfasst, die gegenüber dem dritten Faserbahnteil seitlich herausragt.

## Claims

1. A turbine engine part forming a compressor stator (10) or a turbine nozzle (30) and comprising an inner shroud (12, 32), an outer shroud (16, 36), and vanes (14, 34) extending substantially radially between the inner and outer shrouds and being secured thereto, in which part the inner shroud, the outer shroud, and the vanes form a single part made of composite material having woven fiber reinforcement densified by a matrix, and the fiber reinforcement includes a set of yarns extending continuously along a path traveling longitudinally through the vanes and passing through the inner shroud and the outer shroud, **characterized in that** said vanes extend between the inner shroud and the outer shroud with yarns of the woven fiber reinforcement (210, 220) passing along a full circumference of the inner shroud and with yarns of the woven fiber reinforcement (260, 270) passing along a full circumference of the outer shroud.

2. A turbine engine part according to claim 1, wherein the fiber reinforcement includes a set of yarns extending continuously along a path passing along one of the inner and outer shrouds along its circumference, and then successively through all of the vanes, and then along the other one of the inner and outer shrouds along its circumference.

3. A turbine engine part according to any one of claims 1 to 2, further including at least one flange (170) secured to the outer shroud (160) and extending radially outwards therefrom.

4. A turbine engine part according to any one of claims 1 to 3, further including a portion secured to the inner shroud (120) and defining on the inside thereof a housing of substantially U-shaped cross section that is open towards the inside (110).

5. A turbine engine part according to any one of claims 1 to 4, made of ceramic matrix composite material.

6. A method of fabricating a turbine engine part forming a compressor stator or a turbine nozzle, the part having an inner shroud, an outer shroud, and vanes extending substantially radially between the inner and outer shrouds and being secured thereto, the method comprising:
• making a woven fiber preform (100) including a first set of yarns that pass continuously along the full circumference of a first preform portion forming an inner shroud preform (120, 220), and then successively in a longitudinal direction along second preform portions forming vane preforms (142, 242), and also along the full circumference of a third preform portion forming an outer shroud preform (160, 260), the yarns of the first set of yarns passing in succession along said second preform portions by passing from one second preform portion to the next in alternation through the first preform portion and through the third preform portion; and
• densifying the fiber preform with a matrix.

7. A method according to claim 6, wherein the making of the fiber preform comprises:
1) weaving a fiber strip (200) with a first set of yarns extending continuously in the longitudinal direction of the strip and comprising a plurality of layers of parallel yarns (C1, C2, C3, C4), and a second set of yarns (T1, T2, T3) woven with the yarns of the first set along woven segments of the fiber strip that are separated from one another by non-woven segments, the fiber strip comprising:
• a first fiber strip portion (220) extending over a length corresponding to the length of the first preform portion, the first fiber strip portion being made up of woven segments (222) alternating with non-woven segments (224);
• a second fiber strip portion (240) immediately following the first portion and made up of woven segments (242) alternating with non-woven segments (244a, 244b), the woven segments of the second fiber strip portion corresponding to the second preform portions and having a length (L) corresponding to the longitudinal dimension of the vanes, and the non-woven segments of the second fiber strip portion forming connection portions between consecutive vane preforms; and
• a third fiber strip portion (260) immediately following the second portion (240) and extending over a length corresponding to the length of the third preform portion, the third fiber strip portion being made up of woven segments (262) alternating with non-woven segments (264) ;
• the total number of woven and non-woven segments in each of the first and third portions being equal to the number of vanes; and
2) shaping the fiber strip, comprising:
• rolling up the first fiber strip portion (220);
• folding the second fiber strip portion (240) so as to place its woven segments substantially radially relative to the rolled-up first fiber strip portion; and
• rolling up the third fiber strip portion (260) ;
• the non-woven segments (244a, 244b) of the second fiber strip portion that form connection portions between consecutive vane preforms being engaged through the non-woven segments in alternation in the rolled-up first fiber strip portion and in the rolled-up third fiber strip portion.

8. A method according to claim 7, wherein, after engaging a non-woven segment (244a, 244b) of the second fiber strip portion forming a connection portion between two consecutive vane preforms through a non-woven segment of the first or the third fiber portion (224, 264), said non-woven segment of the second fiber preform portion is woven.

9. A method according to claim 8, wherein the weaving is performed with yarns of the first set of yarns in said non-woven segment of the second fiber preform portion being interlinked with yarns of the first set of yarns in said non-woven segment of the first or of the third preform portion (224, 264).

10. A method according to any one of claims 6 to 9, wherein, at its end remote from its end adjacent to the second fiber strip portion, the first fiber strip portion is extended by a fourth fiber strip portion (210) woven over its entire length so that after being rolled up it forms an inner lining of the inner shroud.

11. A method according to claim 10, wherein the making of the fiber preform includes inwardly-folding side portions of said inner lining (210) in order to impart a substantially U-shaped cross section (110) thereto.

12. A method according to any one of claims 7 to 11, wherein, at its end remote from its end adjacent to the second fiber strip portion, the third fiber strip portion is extended by a fifth fiber strip portion (270) that is woven along its entire length so that after being rolled up it forms an outer lining of the outer shroud.

13. A method according to claim 12, wherein the fifth fiber strip portion is of a width that is greater than the width of the third portion, and the making of the fiber preform includes outwardly folding at least a portion (170) of said outer lining that projects laterally relative to the third fiber strip portion.
